# EUROPÄISCHE PATENTSCHRIFT

(11) **EP 2 360 576 B1**
(45) Veröffentlichungstag und Bekanntmachung des Hinweises auf die Patenterteilung: **22.03.2017**
(21) Anmeldenummer: 10000731.9
(22) Anmeldetag: 25.01.2010
(51) Int. Cl.: G06F 9/455, G06F 9/44

(54) **Verfahren und Einrichtung zur Projektierung einer industriellen Automatisierungsanordnung**
Method and device for projecting an industrial automation assembly
Procédé et dispositif de projection d'un dispositif d'automatisation industriel

(43) Veröffentlichungstag der Anmeldung: 24.08.2011
(73) Patentinhaber: Siemens Aktiengesellschaft, 80333 München (DE)
(72) Erfinder: Banik, Thomas, 91058 Erlangen (DE); Kerschbaum, Sven, 91052 Erlangen (DE); Lange, Ronald, 90766 Fürth (DE); Talanis, Thomas, 91336 Heroldsbach (DE); Volkmann, Frank, 90475 Nürnberg (DE)

(56) Entgegenhaltungen:
- EP-A1- 0 582 536
- EP-A2- 0 401 975
- DE-A1- 19 639 424
- KURLANDER D ET AL: "A HISTORY-BASED MACRO BY EXAMPLE SYSTEM" UIST '92. 5TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. MONTEREY, NOV. 15 - 18, 1992; [ACM SYMPOSIUM ON USER INTERFACE SOFTWARE AND TECHNOLOGY], NEW YORK, N, 15. November 1992 (1992-11-15), Seiten 99-106, XP000337555 ISBN: 978-0-89791-549-6
- INGO WASSINK ET AL: "Designing Workflows on the Fly Using e-BioFlow" 24. November 2009 (2009-11-24), SERVICE-ORIENTED COMPUTING, SPRINGER BERLIN HEIDELBERG, BERLIN, HEIDELBERG, PAGE(S) 470 - 484 , XP019134582 ISBN: 9783642103827 * das ganze Dokument *

## Beschreibung

Die Erfindung betrifft ein Verfahren zur Projektierung einer industriellen Automatisierungsanordnung gemäß dem Patentanspruch 1, und eine Einrichtung zur Projektierung einer industriellen Automatisierungsanordnung gemäß dem Patentanspruch 6.

Industrielle Automatisierungsanordnungen bestehen zum einen aus Hardware, also aus aktiven und passiven elektrischen und elektronischen Bauteilen, und zum anderen aus Software bzw. einer Vielzahl von Computerprogrammen, die durch die aktiven Komponenten der industriellen Automatisierungsanordnung abgearbeitet werden. Die Hardware der Automatisierungsanordnung wird in der Regel an bildschirmunterstützten Arbeitsplätzen in einem interaktiven Vorgang von Benutzern zusammengestellt und "verschaltet"; dieser Prozess wird auch als "Engineering" oder häufig als "Projektierung" bezeichnet. Dabei werden häufig graphische Objekte, die die Komponenten der Automatisierungsanordnung repräsentieren, aus Bauteile-Bibliotheken ausgewählt, auf einer Arbeitsfläche angeordnet und miteinander in Bezug gesetzt. Auf ähnliche Weise kann auch die Software mittels "graphischer Programmierung" erzeugt werden; auch in diesem Fall spricht man oft von einer "Projektierung". Dabei ist es allgemein bei der Projektierung gebräuchlich, dass ein Benutzer mit einer Folge von Bedienaktionen an einer graphischen Benutzeroberfläche, oft auch als GUI bezeichnet (GUI = Graphical User Interface), die Gestalt der HardwareKonfiguration und die Architektur der Software bestimmt. Die Bedienaktionen (Eingaben) wirken sich dabei auf ein Objektmodell aus, in welchem die Objekte, die die automatitisierungstechnischen Hardware-Komponenten und/oder Software-Komponenten und deren Bezüge zueinander repräsentieren, aus.

Dieses Objektmodell ist eine datentechnische Darstellung der Hardware bzw. der Software und ist allgemein im Speicherbereich eines Computers bzw. Projektierungs-Arbeitsplatzes gespeichert.

Bei der Erstellung bzw. Projektierung automatisierungstechnischer Anlagen kommt es häufig vor, dass bestimmte Komponentengruppen immer wieder neu erzeugt werden müssen, wonach diese dann individualisiert werden. Beispielsweise wird eine Kombination aus einer bestimmten Rechnereinheit (CPU) und weiteren Baugruppen immer wieder in einer oder mehreren Automatisierungsanordnungen verbaut, wobei jedoch einzelne Abweichungen auftreten können, beispielsweise die Verwendung einer abweichenden CPU-Type o.ä.. Um einen Benutzer eines Projektierungsarbeitsplatzes von der wiederholten Projektierung gleicher oder ähnlicher Baugruppen, Komponentengruppen oder Software-Module zu entlasten, sind verschiedene Hilfsmittel bekannt. Beispielsweise können Gruppen von Objekten (z.B. Komponenten) und deren Bezüge miteinander zu "Funktionsblöcken" zusammengefügt und in einer Bibliothek gespeichert werden, so dass diese als Module immer wieder verwendet werden können. Nachteilig ist dabei unter anderem, dass solche Bibliotheken sehr umfangreich sein können, so dass es schwierig ist, den Überblick über die vorhandenen Module zu behalten oder zu gewinnen, und wobei es schwierig ist, nachträglich die erforderlichen Individualisierungen vorzunehmen. Eine andere Möglichkeit ist die Aufzeichnung von Folgen von Bedienaktionen mittels sogenannter "Makro-Recorder", wobei jede Eingabe eines Benutzers, beispielsweise das Anklicken eines Buttons oder eine Texteingabe, protokolliert wird, wobei ein solches "Makro" beliebig oft wieder "abgespielt" werden kann, wodurch die wiederholte Eingabe von Bedienfolgen vermieden werden kann. Diese "Makros" eignen sich jedoch nur dann, wenn genau die gleichen Voraussetzungen ("Start-Zustand") hinsichtlich der verwendeten Benutzeroberfläche vorliegen, so dass sie regelmäßig nicht im Umfeld der Projektierung von komplexen industriellen Automatisierungsanordnungen nicht sinnvoll eingesetzt werden können.

All dies hat zur Folge, dass heutzutage für jede Kombination (Instanz) einer Automatisierungsanordnung die Projektierung in weiteren Teilen neu vorgenommen werden muss. Dies bedeutet, dass die Hardwarekonfiguration und oft auch die Softwarekonfiguration häufig aus vielen sehr ähnlichen Schritten besteht, die von einem Benutzer (Automatisierungstechniker) dennoch in gleicher oder in ähnlicher Weise häufig wiederholt ausgeführt werden müssen.

Aus der EP 0 401 975 A2 - Cypher "Method for programming by example" ist ein Verfahren zur Programmierung eines Computers bekannt, bei dem Folgen von Bedienschritten mit aufgezeichneten Bedienfolgen verglichen werden, wobei bei einer Übereinstimmung automatisch ein Vorschlag für einen nächsten Bedienschritt gemacht wird.

Es ist daher eine Aufgabe der vorliegenden Erfindung, die Projektierung industrieller Automatisierungsanordnungen zu vereinfachen und dabei insbesondere die wiederholte Projektierung gleicher und ähnlicher Anordnungen bzw. Teil-Anordnungen zu vereinfachen.

Es ist dabei ein Kerngedanke der vorliegenden Erfindung, dass zur Lösung der Aufgabe Folgen von Bedienaktionen und insbesondere deren jeweilige Auswertungen auf die projektierte Automatisierungsanordnung als sogenannte "Bedienbäume" protokolliert (gespeichert) werden. Dem liegt der Gedanke zu Grunde, dass man sich die Struktur einer graphischen Benutzeroberfläche und die darin enthaltenen Befehle als Knoten vorstellen kann, wobei diese Knoten, wenn sie in einer bestimmten Reihenfolge bedient ("durchlaufen") werden, mit Linien verbunden werden, wodurch sich eine Graphik in Gestalt eines hirachischen Baumes ergibt. Nach einer bestimmten Bedienaktion können auf einer graphischen Benutzeroberfläche sinnvoll nur bestimmte nächste Bedienaktionen durchgeführt werden, von denen der Benutzer eine auswählen kann. Jede dieser auswählbaren Möglichkeiten führt dabei zu einem anderen Bedienbaum. Allgemein gilt, dass bei zweimaligem Durchlauf desselben Bedienbaumes auch zweimal dasselbe Resultat erreicht wird. Dabei ist es ein wesentlicher Gedanke der vorliegenden Erfindung, dass die Bedienbäume, die bei der Projektierung einer industriellen Automatisierungsanordnung bzw. eines Teils derselben durchlaufen werden, gespeichert werden, wobei die Bedienaktionen nicht im Sinne eines "Makro-Recorders" isoliert als Eingaben an der graphischen Benutzeroberfläche betrachtet werden, sondern auch deren Auswirkung auf das Objektmodell, welches die industrielle Automatisierungsanordnung repräsentiert, zusammen mit dem zugrunde liegenden Befehl gespeichert wird. Damit wird dem Umstand Rechnung getragen, dass bei modernen graphischen Benutzeroberflächen für viele Funktionen oder Befehle jeweils eine Mehrzahl an Bedienelementen zur Verfügung steht. Wenn nun ähnliche Automatisierungsanordnungen bzw. ähnliche Teile davon mehrfach projektiert werden, kann durch einen Vergleich der dabei durchlaufenden Bedienbäume ein sogenannter "Typ-Bedienbaum" in einer generalisierten ("generischen", also verallgemeinerten) Form bestimmt werden, so dass diejenigen Bedienschritte bzw. die dazu notwendigen Bedienaktionen, die immer gleich sind, automatisiert ausgeführt werden können, und nur diejenigen Bedienschritte, die bei den betrachteten Bedienbäumen unterschiedlich sind bzw. zu unterschiedlichen Resultaten führen, eine Benutzereingabe erfordern. Es ist ein weiterer zentraler Gedanke der vorliegenden Erfindung, dass bei den Bedienschritten, bei denen eine Benutzer-Interaktion notwendig ist, nur solche Alternativen angeboten werden, die an der jeweiligen Stelle auch sinnvoll sind. Dies können zum einen die Alternativen sein, die in den unterschiedlichen betrachteten Bedienbäumen bereits verwendet wurden. Andererseits kann aus den dort verwendeten Bedienaktionen auch eine ganze Gruppe von Altnernativen hergeleitet werden. Dabei ist es eine weitere zentrale Idee der Erfindung, dass diese Alternativen aus einer Menge automatisch erzeugter Bedienbäume gewonnen werden können, wobei diese automatisch erzeugten Bedienbäume von einem Hilfsmittel erzeugt werden können, welches viele oder alle Permutationen bei der Bedienung einer graphischen Benutzeroberfläche automatisch durchführt; dazu kann vorteilhaft eine Datei mit Zusatzinformationen im Sinne eines "Drehbuchs" oder "Use-Cases" für die notwendigen Eingaben vorgesehen werden. Kurz gesagt wird eine Analyse eines Workflows für die Generation neuer Instanzen von Automatisierungsprojekten oder Automatisierungs-teilprojekten verwendet.

Die Aufgabe wird insbesondere durch ein Verfahren zur Projektierung einer industriellen Automatisierungsanordnung gelöst, wobei ein Objektmodell aus datentechnischen Objekten, die automatisierungstechnische Komponenten repräsentieren, und aus Beziehungen zwischen diesen Objekten erzeugt wird,
wobei mittels einer Folge von Bedienaktionen eines Benutzers die Objekte aus einer Objekt-Bibliothek ausgewählt und miteinander in Bezug gesetzt werden. Eine Mehrzahl von Folgen von Bedienaktionen und deren jeweilige Auswirkungen auf das Objektmodell sind als jeweilige Instanz-Bedienbäume gespeichert, wobei zumindest zwei der Instanz-Bedienbäume ausgewählt und mittels erstem Vergleich zur Erzeugung eines verallgemeinerten Typ-Bedienbaumes verwendet werden, wobei der Typ-Bedienbaum zur automatischen Projektierung der industriellen Automatisierungsanordnung verwendet wird. Bei denjenigen Bedienschritten des Typ-Bedienbaumes, bei denen die korrespondierenden Bedienschritte und/oder deren jeweilige Auswirkungen auf das jeweilige Objektmodell der für den Vergleich verwendeten Instanz-Bedienbäume nicht miteinander übereinstimmen, soll eine Benutzerabfrage zur Konkretisierung dieses Bedienschrittes des Typ-Bedienbaumes erfolgen. Dadurch wird dem Benutzer die Möglichkeit gegeben, durchgeführte Handlungsschritte, die sich nur in Varianten unterscheiden, als eine "Anweisungskette mit User-Interaktion" zu generieren. Diese Generierung von Typmodellen findet dabei weitestgehend automatisch durch den Vergleich statt. Mit einem solchen Typmodell als Typ-Bedienbaum lassen sich dann beliebige neue Instanzen dieses Typs einfach erstellen. Hiermit werden oft benötigte Arbeitsabläufe zumindest teilweise automatisiert und sparen einem Benutzer Zeit und minimieren dabei Fehler, die beim wiederholten Ausführen ähnlicher Tätigkeiten häufig auftreten können.

Die Aufgabe wird weiterhin durch eine Einrichtung zur Durchführung des Verfahrens gelöst, wobei eine graphische Benutzeroberfläche zur Auswahl und zur In-Bezugsetzung von datentechnischen Objekten anhand von Symbolen, die automatisierungstechnische Objekte repräsentieren, vorgesehen ist. Dabei weist die Einrichtung eine Erfassungseinrichtung zur Protokollierung von Bedienschritten und zur Protokollierung der mit diesen Bedienschritten verbundenen Auswirkungen auf ein Objektmodell der industriellen Automatisierungsanordnung auf, und dazu eine Speichereinrichtung zur Speicherung einer Vielzahl von die Bedienschritte und deren Auswirkungen repräsentierenden Bedienbäume, und weiterhin einen Typgenerator zur Erzeugung von Typ-Bedienbäumen aus mehreren Folgen von diesen protokollierten Bedienschritten. Mit einer solchen Einrichtung lassen sich die Vorteile des erfindungsgemäßen Verfahrens realisieren.

Vorteilhafte Ausgestaltungen des erfindungsgemäßen Verfahrens sind in den abhängigen Patentansprüchen angegeben. Die dabei angegebenen Merkmale und Vorteile gelten sinngemäß auch für die erfindungsgemäße Einrichtung.

Erfindungsgemäß wird nach der Konkretisierung des Bedienschrittes die daraus resultierende Folge von Bedienschritten mit einer Mehrzahl der gespeicherten Instanz-Bedienbäume mittels zweiter Vergleiche verglichen. Somit kann festgestellt werden, ob der resultierende Instanz-Bedienbaum Bestandteil eines bereits bestehenden Bedienbaumes ist oder eine partielle Übereinstimmung ("Ähnlichkeit") mit einem der gespeicherten Instanz-Bedienbäume aufweist, so dass dieser bestehende Bedienbaum zur automatisierten Fortsetzung der Projektierung verwendet werden kann. Dabei kann derjenige der gespeicherten Instanz-Bedienbäume zur Fortsetzung der automatischen Projektierung verwendet werden, der die größtmögliche Übereinstimmung mit der aus der Konkretisierung resultierenden Folge der bisherigen Bedienschritte aufweist. Alternativ oder zusätzlich kann eine Anzahl der bei den zweiten Vergleichen aufgefundenen Instanz-Bedienbäume dem Benutzer zur Auswahl in einem neuen Dialog angegeben werden, wobei der Benutzer in diesem Dialog eine Auswahl über die automatisierte bzw. teil-automatisierte Fortsetzung der Projektierung treffen kann. Dabei werden bevorzugt die Instanz-Bedienbäume mit hoher

Übereinstimmung angezeigt; aktiv können Sortierktriterien vorgegeben werden.

Je größer die Datenbank mit den gespeicherten Bedienbäumen ist, desto höher ist die Wahrscheinlichkeit, dass ein passender Instanz-Bedienbaum aufgefunden werden kann, welcher für die automatisierte bzw. teil-automatisierte Projektierung bzw. deren Fortsetzung verwendet werden kann. Zu diesem Zweck kann eine automatisierte Bedienung von GUI-Elementen einer grafischen Benutzeroberfläche einer Projektierungs-Software für die Ermittlung einer Anzahl allgemeiner Bedienbäume verwendet werden, wobei diese allgemeinen Bedienbäume als weitere Instanz-Bedienbäume gespeichert und verwendet werden. Für die automatisierte Bedienung von solchen GUI-Elementen können vorab Informationen gespeichert werden, die für die automatisierte Bedienung relevant sind. So können beispielsweise in XML-Dateien oder in anderen Formaten Eingaben hinterlegt werden, welche in Text- oder Wertefelder eingetragen werden können, um einen Benutzerdialog der der Bedienoberfläche zu bedienen. Weiter können Fehlermeldungen und andere Ausgaben der grafischen Benutzeroberfläche ausgewertet werden, um solche Bedienbäume auszufiltern, welche zu fehlerhaften oder unsinnigen Resultaten führen. Somit werden die gespeicherten Bedienbäume (allgemeinen Bedienbäume) auf solche Varianten beschränkt, welche zu gewünschten Ergebnissen führen können. Die allgemeinen Bedien-Bäume können als gespeicherte Instanzen-Bedienbäume verwerdet werden.

Vorteilhaft bietet die Benutzerabfrage zur Konkretisierung in einem Auswahldialog dem Benutzer eine Anzahl von Bedienmöglichkeiten zur Auswahl an, die eine Verallgemeinerung der als unterschiedlich identifizierten Bedienschritte der im ersten Vergleich verglichenen Instanz-Bedienbäume darstellt. So kann beispielsweise bei solchen Bedienschritten, die in einem ersten Fall ein erstes Objekt einer Objekte-Klasse und in einem zweiten Bedienbaum ein zweites Objekt dieser Objekte-Klasse betreffen, derart verallgemeinert werden, dass im zugehörigen Dialog der Benutzerabfrage alle Objekte dieser Objekte-Klasse zur Auswahl angeboten werden.

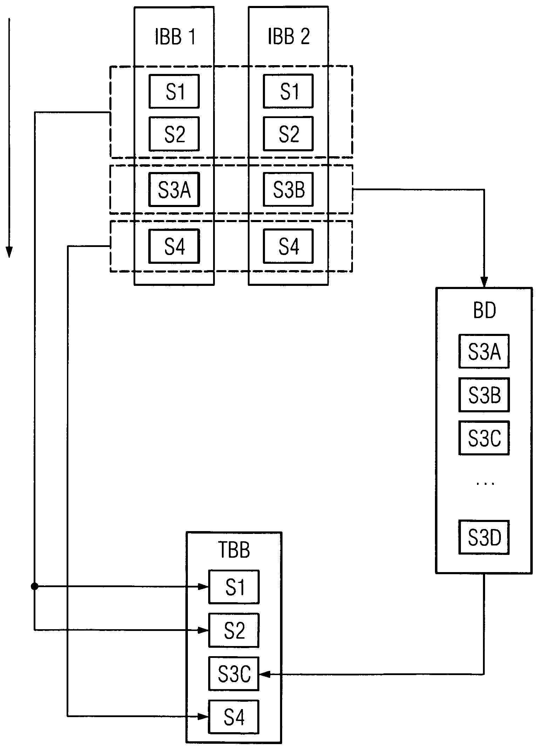

Ein Ausführungsbeispiel des erfindungsgemäßen Verfahrens wird nachfolgend anhand der Zeichnung erläutert. Es dient gleichzeitig der Erläuterung einer erfindungsgemäßen Einrichtung zur Projektierung.

Dabei zeigt die einzige Figur schematisch den Vergleich zweier Bedienbäume und die daraus resultierende Generierung eines Typ-Bedienbaums mit einem Bedienschritt für eine Benutzerabfrage.

In der Figur ist schematisch ein vereinfachter Fall für die Projektierung einer Hardware-Anordnung für eine industrielle Automatisierungsanordnung gezeigt. Die dabei gezeigten Bedienschritte S1, S2, S3A, S3B, S4 sind dabei Resultat einer entsprechenden Abfolge von Bedienaktionen, die ein Benutzer an einer grafischen Benutzeroberfläche ("Projektier-Tool") vorgenommen hat. Der Pfeil am linken Rand der Figur gibt dabei die zeitliche Abfolge der Bedienschritte wider; alternativ kann auch eine logische Reihenfolge betrachtet werden. Die gezeigten Bedienschritte S1, S2, S3A, S3B, S4 repräsentieren dabei in erster Linie Auswirkungen auf ein Objektmodell der industriellen Automatisierungsanordnung und sind daher unabhängig von der konkreten Benutzeraktion, was bedeutet, dass es beispielsweise unerheblich ist, ob der Bedienschritt S1 durch das Betätigen eines Pull-Down-Menüs, durch Import einer Datei oder durch eine andere Bedienaktion erzeugt wurde.

In der Figur sind zwei Instanzen-Bedienbäume IBB1, IBB2 als Resultat zweier Projektierungen dargestellt, die in einem Speicher des Projektierungs-Arbeitsplatzes jeweils gespeichert sind und die beispielsweise zu unterschiedlichen Zeitpunkten und beispielsweise auch bei unterschiedlichen Projekten erzeugt worden sind. Durch einen Befehl eines Benutzers wird eine Mehrzahl der gespeicherten Instanzen-Bedienbäume IBB1, IBB2 - aus Gründen der Übersichtlichkeit sind im Ausführungsbeispiel nur zwei Instanzen-Bedienbäume IBB1, IBB2 dargestellt - ausgewählt und einem automatisierten Vergleich zugeführt. Ziel ist es, eine weitere industrielle Automatisierungsanordnung, also eine neue Instanz, basierend auf den vorliegenden "Erfahrungen" in Gestalt der gespeicherten Instanzen-Bedienbäume IBB1, IBB2 zu erzeugen. Die dazu benutzte Einrichtung zur automatisierten Projektierung stellt fest, dass die ausgewählten Instanzen-Bedienbäume IBB1, IBB2 in den ersten beiden betrachteten Bedienschritten S1, S2 übereinstimmen. Das führt dazu, dass für den Typ-Bedienbaum TBB, der die neue industrielle Automatisierungsanordnung (neue Instanz) repräsentiert, mit den übereinstimmenden Bedienschritten S1, S2 ausgestattet wird. Dieser Schritt kann ohne eine Benutzeraktion erfolgen.

Die dritten Bedienschritte S3A, S3B unterscheiden sich jedoch in den beiden betrachteten Instanzen-Bedienbäumen IBB1, IBB2. Deswegen wird einem Benutzer, also dem Projekteur, ein Benutzerdialog BD für eine Benutzerabfrage präsentiert, wobei dort zunächst einmal die beiden Bedienschritte S3A, S3B aus den verglichenen Instanz-Bedienbäumen IBB1, IBB2 dargestellt und zur Auswahl angeboten werden. In den neuen Bedienbaum TBB wird also ein Bedienschritt aufgenommen, der zur Ausgabe einer Benutzerabfrage führt. Nun sei angenommen, dass es sich bei dem Bedienschritt S3A um das Hinzufügen einer CPU des Typs A und bei dem Bedienschritt S3B um das Hinzufügen einer CPU des Typs B handelt. Diesen beiden Bedienschritten ist also gemeinsam, dass eine Komponente der Klasse "CPU" hinzugefügt und mit anderen Komponenten (aus den Bedienschritten S1, S2) verschaltet wird. Aus diesem Grund erweitert die Einrichtung zur Projektierung den Benutzerdialog BD um weitere Komponenten aus der entsprechenden Klasse "CPU" eines gespeicherten Bauteile-Katalogs. Dies sind im Beispiel der Figur Bedienschritte S3C, S3D, die das Hinzufügen von CPU's des Typs C bzw. des Typs D umfassen.

Im dargestellten Beispiel sei nun weiter angenommen, dass sich der Benutzer im Benutzerdialog BD und der darin realisierten Benutzerabfrage konkret für den Bedienschritt S3C entscheidet, wodurch der entsprechende Bedienschritt des Typ-Bedienbaumes konkretisiert wird. Da der nachfolgende Bedienschritt S4 in beiden betrachteten Instanz-Bedienbäumen IBB1, IBB2 wieder gleich ist, kann dieser Bedienschritt S4 ohne Benutzerabfrage in den Typ-Bedienbaum TBB übernommen werden.

In einer vorteilhaften Ausgestaltung der Erfindung kann bei der manuellen Projektierung des Typ-Bedienbaumes TBB auch ein fortwährender Vergleich mit gespeicherten Instanz-Bedienbäumen IBB1, IBB2 vorgenommen werden. Dies bedeutet im vorliegenden Ausführungsbeispiel, dass nach der manuellen Eingabe des Bedienschrittes S1 automatisch der Bedienschritt S2 vorgegeben wird, da bei allen gespeicherten Instanz-Bedienbäumen IBB1, IBB2 nach dem Bedienschritt S1 immer der Bedienschritt S2 folgt. Falls nach dem zweiten Bedienschritt als ein dritter Bedienschritt abweichend von der Darstellung in der Figur der Bedienschritt S3A durch eine Benutzeraktion eingegeben wird, findet dieser "Online-Vergleich" heraus, dass offensichtlich eine Automatisierungsanordnung nach Muster des Instanzen-Bedienbaums IBB1 projektiert werden soll, so dass der nachfolgende Bedienschritt S4 aus dem Instanzen-Bedienbaum IBB1 vorgegeben bzw. automatisch eingefügt wird.

In einer weiteren vorteilhaften Ausgestaltung der Erfindung können sog. allgemeine Bedienbäume automatisch ermittelt und in der gleichen Weise wie die Instanzen-Bedienbäume für den Vergleich und damit für die automatisierte Projektierung verwendet werden. Die allgemeinen Bedienbäume werden dabei durch eine automatisierte Bedienung der Benutzeroberfläche des Projektierungs-Tools erzeugt. Als ein Beispiel sei angenommen, dass die Benutzeroberfläche des Projektierungs-Tools derart strukturiert ist, dass nach dem Projektieren einer CPU zwingend als nächster Schritt (Bedienschritt) eine passende Stromversorgung dem Projekt hinzugefügt werden muss. In einem solchen Fall würden alle allgemeinen Bedienbäume, bei denen als Bedienschritt das Hinzufügen einer CPU gewählt wurde, zwingend als nächster Bedienschritt das Hinzfügen einer Stromversorgung zeigen. Falls nun ein Benutzer in seinem Projekt eine entsprechend CPU projektiert, würde die Vergleichseinrichtung alle Bedienbäume, also sowohl die Instanzen-Bedienbäume als auch die gleichartig genutzten allgemeinen Bedienbäume, auffinden, in denen ein Bedienschritt vorkommt, der das Hinzufügen dieser CPU beschreibt. Allen dabei aufgefundenen Bedienbäumen wäre gemein, dass danach ein weiterer Bedienschritt erfolgt, der das Hinzufügen der passenden Stromversorgung zum Inhalt hat. Dieser Bedienschritt kann dann vom System automatisch vorgegeben werden.

## Patentansprüche

1. Verfahren zur Projektierung einer industriellen Automatisierungsanordnung,
wobei ein Objektmodell aus datentechnischen Objekten, die automatisierungstechnische Komponenten repräsentieren, und aus Beziehungen zwischen diesen Objekten erzeugt wird,
wobei mittels einer Folge von Bedienaktionen eines Benutzers die Objekte aus einer Objekt-Bibliothek ausgewählt und miteinander in Bezug gesetzt werden,
wobei eine Mehrzahl von Folgen von Bedienaktionen und deren jeweilige Auswirkungen auf das Objektmodell als jeweilige Instanz-Bedienbäume (IBB1, IBB2) mit Bedienschritten gespeichert sind,
wobei zumindest zwei der Instanz-Bedienbäume (IBB1, IBB2) ausgewählt und mittels eines automatisierten ersten Vergleichs zur Erzeugung eines verallgemeinerten Typ-Bedienbaumes (TBB) verwendet werden,
wobei der Typ-Bedienbaum zur automatischen Projektierung der industriellen Automatisierungsanordnung verwendet wird,
wobei bei denjenigen Bedienschritten (S3A, S3B) des Typ-Bedienbaumes, bei denen die korrespondierenden Bedienschritte der für den Vergleich verwendeten Instanz-Bedienbäume (IBB1, IBB2), oder deren jeweilige Auswirkungen auf das jeweilige Objektmodell, nicht miteinander übereinstimmen, eine Benutzerabfrage (BD) zur Konkretisierung dieses Bedienschrittes (S3) des Typ-Bedienbaumes (TBB) erfolgt, indem dem Benutzer in einem Auswahldialog eine Anzahl von Bedienmöglichkeiten (S3A, S3B, S3C, S3D) zur Auswahl angeboten wird, wobei die zur Auswahl angebotenen Bedienmöglichkeiten (S3A, S3B, S3C, S3D) eine Verallgemeinerung der als unterschiedlich identifizierten Bedienschritte (S3A, S3B) der im ersten Vergleich verglichenen Instanz-Bedienbäume (IBB1, IBB2) darstellen und wobei bei denjenigen Bedienschritten (S3A, S3B) des Typ-Bedienbaumes, bei denen die korrespondierenden Bedienschritte der für den Vergleich verwendeten Instanz-Bedienbäume (IBB1, IBB2), und deren jeweilige Auswirkungen auf das jeweilige Objektmodell, miteinander übereinstimmen, automatisiert ausgeführt werden, **dadurch gekennzeichnet,**
**dass** nach der Konkretisierung des Bedienschrittes (S1, S2, S3A, S3B, S4) die daraus resultierende Folge von Bedienschritten (S1, S2, S3A, S3B, S4) mit einer Mehrzahl der gespeicherten Instanz-Bedienbäume (IBB1, IBB2) mittels zweiter Vergleiche derart verglichen wird, um dabei festzustellen, ob die resultierende Folge von Bedienschritten Bestandteil eines bereits bestehenden Bedienbaumes ist oder eine partielle Übereinstimmung mit einem der gespeicherten Instanz-Bedienbäume aufweist, so dass dieser bestehende Bedienbaum zur automatisierten Fortsetzung der Projektierung verwendet werden kann.

2. Verfahren nach Patentanspruch 1,
**dadurch gekennzeichnet,**
**dass** derjenige der gespeicherten Instanz-Bedienbäume (IBB1, IBB2) zur Fortsetzung der automatischen Projektierung verwendet wird, der die größtmögliche Übereinstimmung mit der aus der Konkretisierung resultierenden Folge der bisherigen Bedienschritte (S1, S2, S3A, S3B, S4) aufweist.

3. Verfahren nach Patentanspruch 1,
**dadurch gekennzeichnet,**
**dass** eine Anzahl der bei den zweiten Vergleichen aufgefundenen Instanz-Bedienbäume (IBB1, IBB2) dem Benutzer zur Auswahl in einem Dialog angegeben werden, wobei ein von dem Benutzer ausgewählter der Instanz-Bedienbäume (IBB1, IBB2) zur Fortsetzung der automatischen Projektierung verwendet wird.

4. Verfahren nach einem der vorhergehenden Patentansprüche,
**dadurch gekennzeichnet,**
**dass** durch eine automatisierte Bedienung von GUI-Elementen einer graphischen Benutzeroberfläche einer Projektierungs-Software eine Anzahl allgemeiner Bedienbäume ermittelt wird, wobei diese allgemeinen Bedienbäume als weitere Instanz-Bedienbäume (IBB1, IBB2) gespeichert werden.

5. Verfahren nach einem der vorhergehenden Patentansprüche,
**dadurch gekennzeichnet,**
**dass** die Benutzerabfrage zur Konkretisierung in einem Auswahldialog dem Benutzer eine Anzahl von Bedienmöglichkeiten zur Auswahl anbietet, die eine Verallgemeinerung der als unterschiedlich identifizierten Bedienschritte (S1, S2, S3A, S3B, S4) der im ersten Vergleich verglichenen Instanz-Bedienbäume (IBB1, IBB2) darstellt.

6. Einrichtung zur Projektierung einer industriellen Automatisierungsanordnung,
mit einer graphischen Benutzeroberfläche zur Auswahl und zur In-Bezugsetzung von datentechnischen Objekten anhand von Symbolen, die automatisierungstechnische Objekte repräsentieren,
wobei die Einrichtung mit einer Erfassungseinrichtung zur Protokollierung von Bedienschritten (S1, S2, S3A, S3B, S4) und zur Protokollierung der mit diesen Bedienschritten (S1, S2, S3A, S3B, S4) verbundenen Änderungen des Objektmodells der industriellen Automatisierungsanordnung aufweist,
wobei die Einrichtung eine Speichereinrichtung zur Speicherung einer Vielzahl von die Bedienschritte (S1, S2, S3A, S3B, S4) und deren Auswirkungen auf das Objektmodell repräsentierenden Bedienbäume aufweist, und mit einem Typgenerator zur Erzeugung von Typ-Bedienbäumen (TBB) aus mehreren Folgen von protokollierten Bedienschritten (S1, S2, S3A, S3B, S4),
**dadurch gekennzeichnet, dass**
die Einrichtung zur Durchführung eines zuvor beschriebenen Verfahren ausgebildet ist.

## Claims

1. Method for planning an industrial automation arrangement, an object model being generated from data objects, which represent automation components, and from relationships between these objects,
a sequence of control actions by a user being used to select the objects from an object library and to relate them to one another,
a plurality of sequences of control actions and their respective effects on the object model being stored as respective entity control trees (IBB1, IBB2) with control steps,
at least two of the entity control trees (IBB1, IBB2) being selected and being used to generate a generalized type control tree (TBB) using an automated first comparison,
the type control tree being used to automatically plan the industrial automation arrangement,
wherein, in the case of those control steps (S3A, S3B) of the type control tree in which the corresponding control steps of the entity control trees (IBB1, IBB2) used for the comparison, or their respective effects on the respective object model, do not match one another, a user query (BD) is effected in order to specify this control step (S3) of the type control tree (TBB), in that the user is offered a number of control possibilities (S3A, S3B, S3C, S3D) for selection in a selection dialog, the control possibilities (S3A, S3B, S3C, S3D) offered for selection generalizing the control steps (S3A, S3B) identified as different in the entity control trees (IBB1, IBB2) compared in the first comparison, and wherein, in the case of those control steps (S3A, S3B) of the type control tree in which the corresponding control steps of the entity control trees (IBB1, IBB2) used for the comparison and their respective effects on the respective object model match one another, they are carried out in an automated manner,
**characterized**
**in that**, after the control step (S1, S2, S3A, S3B, S4) has been specified, the resultant sequence of control steps (S1, S2, S3A, S3B, S4) is compared with a plurality of the stored entity control trees (IBB1, IBB2) using second comparisons in such a way as to determine thereby whether the resultant sequence of control steps is part of an already existing control tree or has a partial match with one of the stored entity control trees, with the result that this existing control tree can be used for the automated continuation of the planning process.

2. Method according to Patent Claim 1,
**characterized**
**in that** that entity control tree of the stored entity control trees (IBB1, IBB2) which has the greatest possible match with the sequence of previous control steps (S1, S2, S3A, S3B, S4) which results from the specifying process is used to continue the automatic planning process.

3. Method according to Patent Claim 1,
**characterized**
**in that** a number of the entity control trees (IBB1, IBB2) found during the second comparisons are indicated to the user for selection in a dialog, one of the entity control trees (IBB1, IBB2) which is selected by the user being used to continue the automatic planning process.

4. Method according to one of the preceding patent claims,
**characterized**
**in that** a number of general control trees are determined by automated control of GUI elements of a graphical user interface of planning software, these general control trees being stored as further entity control trees (IBB1, IBB2).

5. Method according to one of the preceding patent claims,
**characterized**
**in that** the user query for the specifying process provides the user with a number of control possibilities for selection in a selection dialog, which number of control possibilities generalize the control steps (S1, S2, S3A, S3B, S4) identified as different in the entity control trees (IBB1, IBB2) compared in the first comparison.

6. Device for planning an industrial automation arrangement, having a graphical user interface for selecting and relating data objects on the basis of symbols which represent automation objects,
the device having an acquisition device for logging control steps (S1, S2, S3A, S3B, S4) and for logging the changes to the object model of the industrial automation arrangement which are associated with these control steps (S1, S2, S3A, S3B, S4),
the device having a memory device for storing a multiplicity of control trees which represent the control steps (S1, S2, S3A, S3B, S4) and their effects on the object model, and a type generator for generating type control trees (TBB) from a plurality of sequences of logged control steps (S1, S2, S3A, S3B, S4), **characterized**
**in that** the device is designed to carry out a previously described method.

## Revendications

1. Procédé de projection d'un agencement d'automatisation industriel,
dans lequel un modèle d'objet est réalisé à partir d'objets informatiques, qui représentent des composantes de technique d'automatisation, et à partir de relations existantes entre lesdits objets est produit,
dans lequel les objets sont choisis dans une bibliothèque d'objets et sont mis en relation les uns avec les autres au moyen d'une séquence de commandes effectuées par un utilisateur,
dans lequel une pluralité de séquences de commandes et leurs effets respectifs sur le modèle d'objet sont mémorisé(e)s sous forme d'arborescences de commande d'instance (IBB1, IBB2) respectives avec des étapes de commande,
dans lequel au moins deux des arborescences de commande d'instance (IBB1, IBB2) sont choisies et sont utilisées au moyen d'une première comparaison automatisée pour produire une arborescence de commande de type (TBB) généralisée,
dans lequel l'arborescence de commande de type est utilisée pour une projection automatique de l'agencement d'automatisation industriel,
dans lequel une requête d'utilisateur (BD), destinée à la concrétisation de ladite étape de commande (S3) de l'arborescence de commande de type (TBB), a lieu lors des étapes de commande (S3A, S3B) de l'arborescence de commande de type à l'occasion desquelles les étapes de commande correspondantes des arborescences de commande d'instance (IBB1, IBB2) utilisées pour la comparaison, ou leurs effets respectifs sur le modèle d'objet respectif, ne coïncident pas les un(e)s avec les autres, en proposant à l'utilisateur, lors d'un dialogue de sélection, de sélectionner parmi un certain nombre de possibilités de commande (S3A, S3B, S3C, S3D), dans lequel les possibilités de commande (S3A, S3B, S3C, S3D) proposées à la sélection représentent une généralisation des étapes de commande (S3A, S3B), identifiées comme étant différentes, des arborescences de commande d'instance (IBB1, IBB2) comparées lors de la première comparaison et dans lequel la réalisation se fait de manière automatisée pour les étapes de commande (S3A, S3B) de l'arborescence de commande de type pour lesquelles les étapes de commande correspondantes des arborescences de commande d'instance (IBB1, IBB2) utilisées pour la comparaison, et leurs effets respectifs sur le modèle d'objet respectif, coïncident,
**caractérisé en ce que**
après la concrétisation de l'étape de commande (S1, S2, S3A, S3B, S4), la séquence résultante d'étapes de commande (S1, S2, S3A, S3B, S4) est comparée avec une pluralité des arborescences de commande d'instance (IBB1, IBB2) mémorisées, au moyen de deuxièmes comparaisons, de manière à déterminer si la séquence résultante d'étapes de commande fait partie d'une arborescence de commande déjà constituée ou présente une coïncidence partielle avec une des arborescences de commande d'instance mémorisées, de sorte que ladite arborescence de commande constituée peut être utilisée pour une poursuite automatisée de la projection.

2. Procédé selon la revendication 1,
**caractérisé en ce que**
celle des arborescences de commande d'instance (IBB1, IBB2) mémorisées qui présente la plus grande coïncidence possible avec la séquence, résultant de la concrétisation, des étapes de commande (S1, S2, S3A, S3B, S4) antérieures est utilisée pour la poursuite de la projection automatique.

3. Procédé selon la revendication 1,
**caractérisé en ce que**
un certain nombre des arborescences de commande d'instance (IBB1, IBB2) découvertes lors des deuxièmes comparaisons sont indiquées à l'utilisateur lors d'un dialogue en vue d'une sélection, une des arborescences de commande d'instance (IBB1, IBB2) sélectionnées par l'utilisateur étant utilisée pour une poursuite de la projection automatique.

4. Procédé selon l'une quelconque des revendications précédentes,
**caractérisé en ce que**
un certain nombre d'arborescences de commande générales sont déterminées grâce à une utilisation automatisée d'éléments GUI d'une interface graphique d'utilisateur d'un logiciel de projection, lesdites arborescences de commande générales étant mémorisées sous forme d'autres arborescences de commande d'instance (IBB1, IBB2).

5. Procédé selon l'une quelconque des revendications précédentes,
**caractérisé en ce que**
la requête d'utilisateur destinée à la concrétisation propose à l'utilisateur, lors d'un dialogue de sélection et en vue d'une sélection, un certain nombre de possibilités de commande qui représentent une généralisation des étapes de commande (S1, S2, S3A, S3B, S4), identifiées comme étant différentes, des arborescences de commande d'instance (IBB1, IBB2) comparées lors de la première comparaison.

6. Appareil destiné à une projection d'un agencement d'automatisation industriel,
avec une interface graphique d'utilisateur destinée à une sélection et à une mise en relation d'objets informatiques au moyen de symboles qui représentent des objets associés à un procédé d'automatisation,
dans lequel l'appareil présente un appareil de saisie destiné à une protocolisation d'étapes de commande (S1, S2, S3A, S3B, S4) et à une protocolisation des modifications du modèle d'objet de l'agencement d'automatisation industriel liées audites étapes de commande (S1, S2, S3A, S3B, S4),
dans lequel l'appareil présente un appareil de mémorisation destiné à une mémorisation d'une pluralité des étapes de commande (S1, S2, S3A, S3B, S4) et de leurs effets sur des arborescences de commande représentant le modèle d'objet, et avec un générateur de type destiné à une production d'arborescences de commande de type (TBB) à partir de plusieurs séquences d'étapes de commande (S1, S2, S3A, S3B, S4) mémorisées,
**caractérisé en ce que**
l'appareil est réalisé en vue d'une mise en oeuvre d'un procédé décrit ci-dessus.
